# EUROPÄISCHE PATENTANMELDUNG

(11) **EP 1 261 175 A2**
(43) Veröffentlichungstag der Anmeldung: **27.11.2002**
(21) Anmeldenummer: 02007390.4
(22) Anmeldetag: 10.04.2002
(51) Int. Cl.: H04L 12/56

(54) **Verfahren zur Weiterleitung von Datenpaketen in Routern von Kommunikationsnetzen**

(30) Priorität: 18.05.2001 DE 10124706
(71) Anmelder: ALCATEL, 75008 Paris (FR)
(72) Erfinder: Kühn, Edgar, Dr. rer. nat, 70563 Stuttgar (DE); Eckhardt, Harald, Dipl.-Ing., 70195 Stuttgart (DE)
(74) Vertreter: Dreiss, Fuhlendorf, Steimle & Becker

(57) **Zusammenfassung**

Die Erfindung betrifft ein Verfahren zur Weiterleitung von Datenpaketen in Routern von Kommunikationsnetzen, insbesondere von Datenpaketen nach dem Internet Protokoll (IP) in funkbasierten Zugangsnetzen. Es wird eine Kontextidentifikation (CID1) eines empfangenen Datenpakets ausgewertet. Es wird eine dieser Kontextidentifikation (CID1) zugeordnete Kommunikationsverbindung (LINK15) für die Weiterleitung des Datenpakets mittels einer Tabelle ermittelt. Es wird das Datenpaket über die ermittelte Kommunikationsverbindung (LINK15) ausgesendet.

## Beschreibung

Die Erfindung betrifft ein Verfahren zur Weiterleitung von Datenpaketen in Routern von Kommunikationsnetzen, insbesondere zur Weiterleitung von Datenpaketen nach dem Internet Protokoll in funkbasierten Zugangsnetzen.

Verfahren der vorstehend genannten Art sind bekannt und werden beispielsweise zur Verkehrslenkung in sog. Routern von Mobilfunksystemen eingesetzt. Die Übertragung von Datenpaketen nach dem Internet Protocol (IP) über solche Mobilfunksysteme ist ebenfalls bekannt. Im Folgenden werden solche Datenpakete als IP-Pakete bezeichnet.

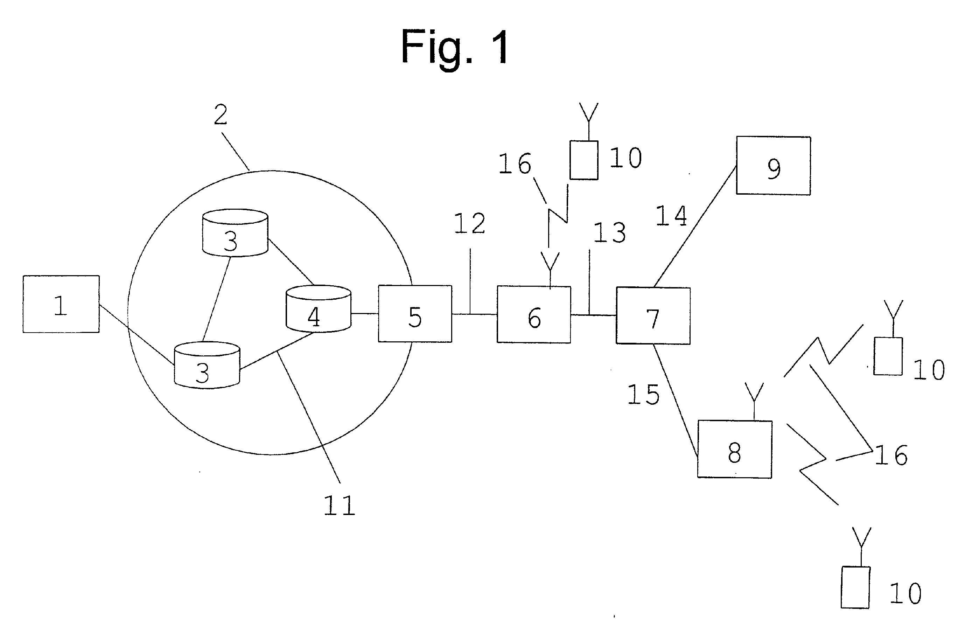

Die dem Stand der Technik entsprechenden Verfahren wenden oft das Verfahren der Header Compression auf IP-Pakete an, um die Protokolleffizienz speziell bei Kommunikationsverbindungen (im Folgenden: Links) mit niedriger Bandbreite zu verbessern. Das Verfahren der Header Compression umfasst zwei Schritte innerhalb eines Routers, nämlich die Dekompression der Daten nach dem Empfang und die erneute Kompression zur Weiterleitung der Daten an den nächsten Router. Diese beiden Schritte sind sehr rechen- und zeitintensiv, da eine Hardwarerealisierung wegen ihrer Komplexität bisher sehr aufwendig ist. Die genaue Funktionsweise der Header Compression ist in der Beschreibung zu Figur 1 anhand eines Beispiels erläutert.

Ein Nachteil bei der Anwendung der Header Compression bei den dem Stand der Technik entsprechenden Verfahren ist die Notwendigkeit der Dekompression eines empfangenen IP-Pakets innerhalb eines Routers, der das IP-Paket lediglich weiterleiten muss, nicht aber als Ziel dieses IP-Pakets bestimmt ist. Diese Dekompression ist notwendig zur korrekten Weiterleitung des IP-Pakets, die i.a. auf einem Verkehrslenkungsverfahren basiert, das die Zieladresse des weiterzuleitenden IP-Pakets als Eingangsgrösse erfordert.

Besonders zeitaufwendig ist das Verkehrslenkungsverfahren, da es eine Verarbeitung der Protokolldaten bis hin zur Schicht 3 des ISO/OSI-Basisreferenzmodells erfordert. Dies beinhaltet insbesondere auch die Dekompressions- und Kompressionsschritte.

Nach der Durchführung des Verkehrslenkungsverfahrens wird bei den bisher bekannten gattungsgemäßen Verfahren das IP-Paket erneut komprimiert und dann an den nächsten Router oder Ziel-Host übertragen.

Insgesamt sind bei Anwendung der Header Compression also drei Schritte innerhalb eines Routers erforderlich, um ein IP-Paket weiterzuleiten, von denen jeder sehr zeitaufwendig ist. Im Hinblick auf eine effiziente Nutzung der Ressourcen des Kommunikationsnetzes ist dies besonders nachteilig, da für ein einzelnes Paket ein sehr hoher Rechenaufwand innerhalb eines Routers nötig ist. Speziell bei Paketen mit wenig Nutzdaten, insbesondere z.B. bei Sprache, verschlechtert sich dadurch die Bandbreiteneffizienz sowie die Paket-Übertragungszeit.

Demgemäß liegt der Erfindung die Aufgabe zugrunde, ein Verfahren zur Weiterleitung von Datenpaketen derart weiterzuentwickeln, dass die Weiterleitung der Datenpakete mit geringerem zeitlichen und technischen Aufwand realisierbar ist.

Diese Aufgabe wird erfindungsgemäß dadurch gelöst, dass eine Kontextidentifikation (Context IDentifier, kurz CID) eines empfangenen Datenpakets ausgewertet wird, dass eine dieser Kontextidentifikation zugeordnete Kommunikationsverbindung mittels einer Tabelle ermittelt wird, und dass das Datenpaket über die ermittelte Kommunikationsverbindung ausgesendet wird. Erfindungsgemäß wird also die CID zusammen mit den der Header Compression unterzogenen IP-Paketen übertragen und kann von einem Router ohne Dekompression ausgewertet werden. Der beim Stand der Technik erforderliche Dekompressions-, Routing- und Kompressionsschritt ist nicht erforderlich.

Zur Anwendung dieses Verfahrens muss ein erster Router bzw. Host eine freie CID1 ermitteln und ein erstes, nicht der Header Compression unterzogenes IP-Paket zusammen mit dieser CID1 an einen zweiten Router senden. Bei Empfang dieses IP-Pakets mit der bisher nicht benutzten CID1 führt der zweite Router ein Verkehrslenkungsverfahren durch und ermittelt einen nächsten Router, an den das IP-Paket weiterzuleiten ist. Dann legt der zweite Router einen neuen Eintrag in einer von ihm verwalteten Tabelle an, der die CID1 des IP-Pakets und die Nummer des Links enthält, über den der zweite Router das IP-Paket an den nächsten Router übertragt. Danach wählt der zweite Router seinerseits eine CID2 für das IP-Paket und überträgt es ohne Header Compression und zusammen mit dieser CID2 an den nächsten Router.

Die CID2 sowie die Nummer des Links, über den der zweite Router das IP-Paket vom ersten Router erhalten hat, ergänzen den erwähnten Tabelleneintrag des zweiten Routers. Dieser Tabelleneintrag ordnet einem Wertepaar aus CID1 und zugehörigem Eingangs-Link ein anderes Wertepaar aus CID2 und zugehörigem Ausgangs-Link zu. Die Tabelle stellt somit in gewisser Weise eine spezielle Art der Verkehrslenkungsinformation bereit.

Ein zweites IP-Paket wird in dem ersten Router der Header Compression unterzogen und mit der bereits für das erste IP-Paket ermittelten CID1 zusammen an den zweiten Router übertragen. Bei Empfang des zweiten IP-Pakets auf dem selben Eingangs-Link wie zuvor sucht der zweite Router in der Tabelle nach dem Wertepaar bestehend aus Eingangs-Link und CID1 des zweiten IP-Pakets und findet das zugehörige, aus Ausgangs-Link und CID2 bestehende Wertepaar. Der zweite Router muss somit keinen der drei eingangs erwähnten Schritte der Dekompression, der Verkehrslenkung und der erneuten Kompression durchführen. Statt dessen kann der zweite Router das IP-Paket sofort mit der CID2 auf dem Ausgangs-Link weiterleiten. Die Weiterleitung erfolgt somit nur durch eine Suche eines Tabelleneintrags, die sehr schnell ausgeführt werden kann und einfach zu implementieren ist.

Besonders vorteilhaft ist es, wenn als Kontextidentifikation der aus dem IETF Protokoll RFC 2507 bekannte sogenannte Context Identifier verwendet wird, und wenn eine Transformation des Wertebereichs der Context Identifier vorgenommen wird, um eine Wertekollision zu vermeiden und um eine eindeutige Zuordnung empfangener IP-Pakete zu den sie umfassenden Paketdatenströmen zu ermöglichen. Diese Ausführungsform gewährleistet Kompatibilität zu herkömmlichen Verfahren, bei denen nach jeder Übertragung von einem Router zum nächsten Router der Schritt der Dekompression vorgenommen und damit die IP-Adresse des Ziels ermittelt wird.

Eine vorteilhafte Weiterbildung des erfindungsgemäßen Verfahrens sieht vor, dass ein empfangenes komprimiertes IP-Paket bzw. komprimierte Kopfdaten eines empfangenen IP-Pakets zum Zweck der Fehlererkennung und/oder Fehlerkorrektur dekomprimiert werden.

Sobald eine Diskrepanz zwischen der dekomprimierten Information des empfangenen IP-Pakets und den in der Tabelle gespeicherten Informationen erkannt wird, kann das IP-Paket in unkomprimierter Form, als sogenanntes "Full-Header"-Paket, über einen Rückkanal angefordert werden.

Die Dekompression kann in ausgewählten, zwischen Sender und Ziel-Host des IP-Pakets liegenden Routern, oder auch nur im Ziel-Host ausgeführt werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Dabei zeigt:
- Figur 1: eine schematische Darstellung eines funkbasierten Zugangsnetzes mit einer Mehrzahl von Routern, in denen das erfindungsgemäße Verfahrens angewandt wird, und
- Figur 2: eine Tabelle zur Verwendung in einem der Router, die die Zuordnung von Kontextidentifizierungen zu Kommunikationsverbindungen wiedergibt.

Figur 1 zeigt ein funkbasiertes Zugangsnetz, ein sogenanntes Radio Access Network (RAN), das z.B. bei GSM - und UMTS-Systemen zur paketorientierten Datenübertragung nach dem erfindungsgemäßen Verfahren verwendet werden kann. Das funkbasierte Zugangsnetz kann in mehrere Abschnitte eingeteilt werden:
- ein Kommunikationsnetz 2, das von einem geeigneten Netzwerkelement 1 Paketdatenströme erhält,
- einen aus Basisstationen 6, 7 bestehenden Zwischenabschnitt des funkbasierten Zugangsnetzes, und
- Basisstationen 8, 9 sowie mobile Kommunikationseinrichtungen 10.

Das Kommunikationsnetz 2 besteht aus mindestens einem Netzknoten. In dem Beispiel nach Figur 1 sind drei Netzknoten 3, 4 abgebildet, von denen die Netzknoten 3 nur mit Netzknoten innerhalb des Kommunikationsnetzes 2 bzw. dem Netzwerkelement 1 verbunden sind, der Netzknoten 4 jedoch auch eine Verbindung zu einer Kommunikationseinrichtung 5 ausserhalb des Kommunikationsnetzes 2 hat.

Die Netzknoten 3, 4 des Kommunikationsnetzes 2 sind untereinander mit Kommunikationsverbindungen (im Folgenden als Links bezeichnet) 11, verbunden, die einen bidirektionalen Datenaustausch ermöglichen und beispielsweise als Kabelverbindungen oder auch Richtfunkstrecken ausgeführt sein können. Die Kommunikationseinrichtung 5, beispielsweise ein sogenannter "Edge-Router", ist ebenfalls über einen Link 11 mit dem Netzknoten 4 des Kommunikationsnetzes 2 verbunden.

Der aus den Basisstationen 6 und 7 bestehende Zwischenabschnitt des gezeigten funkbasierten Zugangsnetzes wird über die Kommunikationseinrichtung 5 sowie die zugehörigen Kommunikationsverbindungen mit dem Kommunikationsnetz 2 verbunden.

Figur 1 zeigt ferner eine Basisstation 8, über die die mobilen Kommunikationseinrichtungen 10 eine Funkverbindung 16 mit dem restlichen funkbasierten Zugangsnetz aufnehmen können. Eine solche Funkverbindung 16 ist auch mit der Basisstation 6 möglich.

Die Kommunikationseinrichtung 5 ist mit der Basisstation 6 über den Link 12 verbunden. Die Basisstationen 6, 7 sind über den Link 13, die Basisstationen 7, 9 über einen Link 14, und die Basisstationen 7, 8 über einen Link 15 miteinander verbunden. Die Links 12, 13, 14 und 15 ermöglichen einen bidirektionalen Datenaustausch und können wie die Links 11 beispielsweise als Kabelverbindungen oder auch Richtfunkstrecken ausgeführt sein.

Die Basisstationen 6 bis 9, die Netzknoten 3, 4 und die Kommunikationseinrichtung 5 werden im Folgenden als Router bezeichnet, da in dieser Beschreibung speziell auf deren Fähigkeit zur Verkehrslenkung Bezug genommen wird.

Der in diesem Ausführungsbeispiel betrachtete Datenaustausch über die Links 11, 12, 13, 14, 15 ist paketorientiert und basiert auf dem Internet Protocol (IP). Dabei werden die auszutauschenden Daten in Datenpakete (IP-Pakete) eingeteilt und paketweise übertragen. Ein solches IP-Paket besteht aus Nutzdaten (Payload) und Kopfdaten (Header). Die Nutzdaten beinhalten die eigentlich zu übertragende Information, die Kopfdaten sind protokollspezifisch und enthalten beim Internet Protocol u.a. die IP-Adresse der Quelle und des Ziels eines IP-Pakets sowie weitere Daten zur Steuerung der Datenübertragung.

Zur Übertragung von IP-Paketen wird oftmals eine sogenannte Header Compression eingesetzt. Das Verfahren besteht im Wesentlichen aus der Ersetzung der Kopfdaten eines IP-Pakets durch einen kürzeren Datensatz, der u.a. eine Kontextidentifikation (CID) beinhaltet. Diese CID steht stellvertretend für die eigentlichen Kopfdaten des IP-Pakets. Solche CIDs sind beispielsweise aus dem IETF (Internet Engineering Task Force) Protokoll RFC 2507 bekannt.

Jeder der Router 3 bis 9 verwaltet eine begrenzte Anzahl CIDs. Jeder Router kann für eine neue Datenübertragung eine CID ermitteln und diese als belegt kennzeichnen, nicht mehr benutzte CIDs können wieder freigegeben werden.

Im Folgenden soll eine typische Datenübertragung von dem Router 6 zu der nachstehend als Endknoten bezeichneten Basisstation 8 betrachtet werden, die aus den IP-Paketen A, B, C, ..., E besteht. Der Schwerpunkt wird dabei auf die schnelle Weiterleitung der Datenpakete in dem Router 7 gelegt. Angeführte CIDs werden zur Illustration fortlaufend numeriert (CID1, CID2, ....), diese Zählung steht jedoch nicht in Verbindung mit dem eigentlichen Wert der CID in dem jeweiligen Router.

### a) Übertragen des ersten IP-Pakets A von dem Router 6 zu dem Router 7

Der Router 6 ermittelt durch Anwendung eines Verkehrslenkungsverfahrens den Link 13 als Ausgangs-Link zur Übertragung des IP-Pakets A an den Router 7. Er wählt eine freie CID1, markiert diese CID1 als belegt und sendet das nicht der Header Compression unterzogene IP-Paket A zusammen mit der CID1 an den Router 7.

### b) Empfangen des IP-Pakets A in dem Router 7

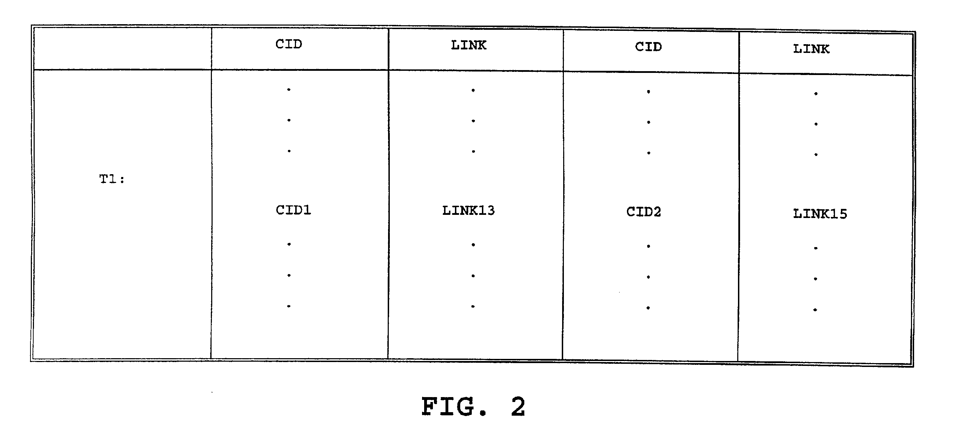

Der Router 7 erkennt beim Empfang des IP-Pakets A, dass eine bisher nicht verwendete CID1 übertragen wurde. Daraufhin legt er einen neuen Eintrag T1 in einer Tabelle gemäß der Figur 2 an.

Figur 2 zeigt beispielhaft anhand von Router 7 eine Tabelle für die Zuordnung von Kontextidentifizierungen zu Links für die Verwendung in den Routern 3 bis 7. Dazu enthält jeder Eintrag der Tabelle neben weiteren möglichen Daten, wie z.B. Kontextinformationen aus vollständigen Kopfdaten, mindestens zwei Wertepaare, nämlich:
- CID des auf dem Eingangs-Link empfangenen IP-Pakets,
- Eingangs-Link,
- CID des auf dem Ausgangs-Link gesendeten IP-Pakets,
- Ausgangs-Link.

Im vorliegenden Ausführungsbeispiel der Figur 1 umfasst der Eintrag in die Tabelle der Figur 2 zunächst nur den Wert der CID1 und die Nummer des Links 13, über den das IP-Paket A in dem Router 7 empfangen wurde.

### c) Weiterleiten des IP-Pakets A

Dann führt der Router 7 unter Verwendung der aus dem Header des IP-Pakets A gewonnenen Zieladresse des IP-Pakets A ein Verkehrslenkungsverfahren durch, mit dem Ergebnis, dass der Link 15 als Ausgangs-Link von dem Router 7 für A verwendet wird. Die Nummer von Link 15 wird ebenfalls in den oben erwähnten Tabelleneintrag T1 eingefügt. Der Router 7 wählt nun seinerseits aus seinem Vorrat freier CIDs eine CID2 aus, die ebenfalls in den Tabelleneintrag T1 eingefügt wird.

Danach sendet der Router 7 das IP-Paket A zusammen mit der CID2 über den Link 15 an den Endknoten 8.

### d) Auswerten des IP-Pakets A in dem Endknoten 8

Hat das IP-Paket A den Endknoten 8 erreicht, so ergibt ein Adressvergleich, dass ein Weiterleiten des IP-Pakets A nicht erforderlich ist. Zur Kennzeichnung, dass diese Datenpakete nicht weitergeleitet werden sollen, kann ein spezieller, für die Weiterleitung von IP-Paketen nicht benötigter Wert für das die Information über den Ausgangs-Link enthaltende Wertepaar oder ein anderes Verfahren gewählt werden.

### e) Übertragen des zweiten IP-Pakets B von dem Router 6 zu dem Router 7

Da es sich um den selben Paketdatenstrom wie in Schritt a) handelt, sendet der Router 6 das IP-Paket B mit dem selben CID, also dem CID1, an den Router 7. Allerdings wird das IP-Paket B zuvor einer Header Compression unterzogen. Dadurch werden die Kopfdaten des IP-Pakets B durch einen kürzeren Datensatz ersetzt, der u.a. die CID1 enthält.

### f) Weiterleiten des zweiten IP-Pakets B von dem Router 7 an den Endknoten 8

Der Router 7 kann mit dem in IP-Paket B übertragenen Wert von CID1 in Kombination mit der Nummer des verwendeten Eingangs-Links 13 aus dem Eintrag T1 der Tabelle nach Figur 2 die Verkehrslenkungsinformation für das IP-Paket B entnehmen. Paket B kann sofort mit dem zugehörigen CID2 über den entsprechenden Ausgangs-Link 15 an den Endknoten 8 weitergeleitet werden. Dekompression, Verkehrslenkung und erneute Kompression sind nicht erforderlich. Erst im Endknoten 8 wird eine Dekompression der IP-Pakete bzw. deren Kopfdaten und die Weitergabe an höhere Protokollschichten durchgeführt.

Ebenso kann mit den IP-Paketen C, D usw. verfahren werden.

Die Router 6 und 7 können ebenso Endknoten für bestimmte Paketdatenströme sein.

Auch die Router 3, 4, und 5 des Kommunikationsnetzes 2 können das beschriebene Verfahren anwenden. Dies ermöglicht im gesamten, in Figur 1 dargestellten funkbasierten Zugangsnetz eine Weiterleitung von IP-Paketen über mehrere Router hinweg ohne Dekompression des IP-Headers, ohne Anwendung eines Verkehrslenkungsverfahrens und ohne erneute Kompression in jedem einzelnen Router zwischen der Quelle und dem Ziel des jeweiligen IP-Pakets.

Besonderer Vorteil des Verfahrens ist, dass es rein lokal in einem oder mehreren Routern oder Netzwerkelementen mit Routing-Funktion angewendet werden kann, ohne dass spezielle Kontroll- und Steuerinformation zu weiteren Routern über die Eingangs- und Ausgangs-Links ausgetauscht werden muss.

Damit ist das beschriebene Verfahren selbstlernend und kompatibel zu Routern ohne diese Funktionalität und für diese transparent. Ein solcher Router muss bei Erhalt eines der Header Compression unterzogenen IP-Pakets den Schritt der Dekompression durchführen, um die zur Verkehrslenkung notwendige IP-Adresse des Ziels des IP-Pakets zu erhalten.

Um das Nummernschema des IETF-Standards nicht zu verletzen, können die CIDs durch geeignete Transformation des verwendeten Wertebereichs umgewandelt werden. Das folgende Beispiel beschreibt diesen Mechanismus anhand der Figur 1.

Es wird davon ausgegangen, dass die Endknoten 8 und 9 IP-Pakete mit Header Compression an den Router 7 senden, der diese an den Router 6 weiterleiten soll. Da die Router nur eine begrenzte Zahl von CIDs aufweisen und der Wertebereich sich aus praktischen Gründen zumindest derzeit von 0 oder 1 aufwärts erstreckt, kann der Fall eintreten, dass sowohl der Router 8 als auch der Router 9 ein IP-Paket D bzw. E mit von ihnen zufällig gleich gewählter CID3 an den Router 7 senden. In dem Router 7 kann dann nur noch die Information über den jeweiligen Eingangs-Link 15 oder 14 zur Unterscheidung der Herkunft der IP-Pakete D und E herangezogen werden. Diese Information wird auch ausgenutzt für die erwähnte Transformation des Wertebereichs, damit der Router 6 bei Empfang der IP-Pakete D und E deren Herkunft unterscheiden kann. Hat die CID3 z.B. den Wert 8, so addiert der Router 7 beim Empfang der IP-Pakete D und E einen Offsetwert von z.B. 120 auf den Wert der CID3 von IP-Paket E, wodurch ein CID4 mit dem Wert 128 entsteht. Der Wert von CID3 des Pakets D wird nicht verändert und beträgt somit immer noch 8. Der Router 6 kann die IP-Pakete D und E nun hinsichtlich ihrer Herkunft unterscheiden, natürlich nur unter der Voraussetzung, dass der Offsetwert grösser ist als der Wertebereich für CIDs des entsprechenden Routers.

## Patentansprüche

1. Verfahren zur Weiterleitung von Datenpaketen in Routern von Kommunikationsnetzen, insbesondere von Datenpaketen nach dem Internet Protokoll (IP) in funkbasierten Zugangsnetzen, **gekennzeichnet durch** die folgenden Schritte:
- Auswerten einer Kontextidentifikation (CID1) eines empfangenen Datenpakets,
- Ermitteln einer dieser Kontextidentifikation (CID1) zugeordneten Kommunikationsverbindung (LINK15) mittels einer Tabelle (Figur 2),
- Aussenden des Datenpakets über die ermittelte Kommunikationsverbindung (LINK15).

2. Verfahren nach Anspruch 1, **gekennzeichnet durch** den folgenden weiteren Schritt:
- Ermitteln einer Kontextidentifikation (CID2) für das über die ermittelte Kommunikationsverbindung (LINK15) auszusendende Datenpaket mittels der Tabelle (Figur 2).

3. Verfahren nach Anspruch 1 und/oder Anspruch 2, **gekennzeichnet durch** den folgenden weiteren Schritt:
- Ermitteln der Kommunikationsverbindung (LINK15) für das auszusendende Datenpaket und/oder der Kontextidentifikation (CID2) des auszusendenden Datenpakets (LINK15) in Abhängigkeit von der Kommunikationsverbindung (LINK13) des empfangenen Datenpakets.

4. Verfahren nach einem der Ansprüche 1 bis 3, **dadurch gekennzeichnet, dass** als Kontextidentifikation der aus dem IETF Protokoll RFC 2507 bekannte sogenannte Context Identifier (CID) verwendet wird.

5. Verfahren nach Anspruch 4, **dadurch gekennzeichnet, dass** eine Transformation des Wertebereichs der Kontextidentifikationen (CIDs) vorgenommen wird, um eine Wertekollision zu vermeiden und um eine eindeutige Zuordnung empfangener Datenpakete zu den sie umfassenden Paketdatenströmen zu ermöglichen.

6. Verfahren nach einem der Ansprüche 1 bis 5, **gekennzeichnet durch** die folgenden Schritte:
- ein erstes Datenpaket wird unkomprimiert, jedoch mit einer Kontextidentifikation (CID1) versendet,
- nachfolgende Datenpakete der selben Datenübertragung werden komprimiert und mit der selben Kontextidentifikation (CID1) versendet.

7. Verfahren nach Anspruch 6, **gekennzeichnet durch** die folgenden weiteren Schritte, wenn ein erstes Datenpaket empfangen wird:
- Eintragen einer neuen Kontextidentifikation (CID2) in der Tabelle (Figur 2),
- Ermitteln der Kommunikationsverbindung (LINK15) für das auszusendende Datenpaket in Abhängigkeit von dem unkomprimierten Datenpaket,
- Eintragen der ermittelten Kommunikationsverbindung (LINK15) in die Tabelle (Figur 2).

8. Verfahren nach Anspruch 7, **gekennzeichnet durch** die folgenden weiteren Schritte:
- Eintragen der Kontextidentifikation (CID1) des empfangenen Datenpakets und/oder der Kommunikationsverbindung (LINK13) des empfangenen Datenpakets in die Tabelle (Figur 2).

9. Verfahren nach einem der Ansprüche 6 bis 8, **dadurch gekennzeichnet, dass** nur die Kopfdaten (Header) der nachfolgenden Datenpakete komprimiert werden.

10. Verfahren nach einem der Ansprüche 6 bis 9, **dadurch gekennzeichnet, dass** ein empfangenes komprimiertes Datenpaket bzw. komprimierte Kopfdaten eines empfangenen Datenpakets zum Zweck der Fehlererkennung und/oder Fehlerkorrektur dekomprimiert werden.

11. Router zur Weiterleitung von Datenpaketen für ein Kommunikationsnetz, **dadurch gekennzeichnet, dass** der Router dazu geeignet ist, das Verfahren nach einem der Ansprüche 1 bis 10 auszuführen.

12. Kommunikationsnetz mit einem Router zur Weiterleitung von Datenpaketen, **dadurch gekennzeichnet, dass** der Router dazu geeignet ist, das Verfahren nach einem der Ansprüche 1 bis 10 auszuführen.
